# EUROPÄISCHE PATENTSCHRIFT

(11) **EP 2 000 350 B1**
(45) Veröffentlichungstag und Bekanntmachung des Hinweises auf die Patenterteilung: **23.06.2010**
(21) Anmeldenummer: 08103403.5
(22) Anmeldetag: 07.04.2008
(51) Int. Cl.: B60N 2/06

(54) **Kraftfahrzeugsitzverstellantrieb**
Vehicle seat adjustment motor
Mécanisme de déplacement d'un siège de véhicule automobile

(30) Priorität: 05.06.2007 DE 102007026107
(43) Veröffentlichungstag der Anmeldung: 10.12.2008
(73) Patentinhaber: ROBERT BOSCH GMBH, 70442 Stuttgart (DE)
(72) Erfinder: Birkert, Reiner, 74626, Bretzfeld (DE)

(56) Entgegenhaltungen:
- WO-A-98/26951
- DE-A1- 4 317 348

## Beschreibung

### Stand der Technik

Die Erfindung betrifft einen Fahrzeugsitzverstellantrieb gemäß dem Oberbegriff des Anspruchs 1, wie aus der WO 98/26951 A bekannt, die Verwendung eines Fahrzeugsitzverstellantriebs gemäß Anspruch 12, einen Fahrzeugsitz gemäß Anspruch 13 sowie ein Fahrzeug gemäß Anspruch 16.

Es sind Fahrzeugsitzverstellantriebe bekannt, die eine elektromotorisch angetriebene Gewindespindel aufweisen. Mit der Gewindespindel ist dabei ein Innengewindeelement eines durch Verdrehen der Gewindespindel entlang der Gewindespindel verstellbaren Reiters in Eingriff. Der Reiter wiederum ist verstellkraftübertragend mit einem Fahrzeugsitzelement gekoppelt. Bei herkömmlichen Fahrzeugsitzen ist dabei jedem zu verstellenden Fahrzeugsitzteil ein eigener Fahrzeugsitzverstellantrieb mit jeweils einem Elektromotor zum Antreiben der zugehörigen Gewindespindel zugeordnet. Somit werden beispielsweise bei einem Fahrzeugsitz mit drei verstellbaren Sitzteilen drei unabhängige Fahrzeugsitzverstellantriebe mit jeweils einem Elektromotor benötigt.

### Offenbarung der Erfindung

### Technische Aufgabe

Der Erfindung liegt die Aufgabe zugrunde, einen Fahrzeugsitzverstellantrieb vorzuschlagen, der zum Verstellen mehrerer Fahrzeugsitzteile geeignet bzw. auf einfache Weise ausbaubar ist. Ferner liegt der Erfindung die Aufgabe zugrunde, einen Fahrzeugsitz mit einer reduzierten Anzahl von Fahrzeugsitzverstellantrieben sowie ein Fahrzeug mit einem derartigen Fahrzeugsitz vorzuschlagen.

### Technische Lösung

Hinsichtlich des Fahrzeugsitzverstellantriebes wird die Aufgabe mit den Merkmalen des Anspruchs 1, hinsichtlich des Fahrzeugsitzes mit den Merkmalen des Anspruchs 13 und hinsichtlich des Fahrzeugs mit den Merkmalen des Anspruchs 16 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, den entlang der Gewindespindel verstellbaren Reiter derart auszubilden, dass ein Verstellkraftübertragungselement, das insbesondere über ein Hebelwerk mit einem zu verstellenden Fahrzeugsitzteil verbindbar ist, je nach Schaltstellung von Kupplungsmitteln entweder mit dem Innengewindeelement des Reiters kraftschlüssig gekoppelt ist und in der Folge zusammen mit dem Innengewindeelement bei sich drehender Gewindespindel entlang der Gewindespindel verstellt wird oder von dem Innengewindeelement entkoppelt ist, insbesondere derart, dass sich das Innengewindeelement zusammen mit der Gewindespindel relativ zu dem Verstellkraftübertragungselement verdreht, und in der Folge keine Verstellbewegung des Verstellkraftübertragungselementes und damit im montierten Zustand des Fahrzeugsitzverstellantriebs keine Verstellbewegung des mit dem Verstellkraftübertragungselement gekoppelten Fahrzeugsitzteils resultiert. Soll also ein bestimmtes Fahrzeugsitzteil nach Vorgabe einer Bedienperson verstellt werden, so muss das Verstellkraftübertragungselement des dem zu verstellenden Fahrzeugsitzteils zugeordneten Reiters kraftschlüssig mit dem zugehörigen Innengewindeelement verbunden werden und die Gewindespindel mittels des elektrischen Antriebsmotors in Rotation versetzt werden. Um zu verhindern, dass das Verstellkraftübertragungselement zusammen mit dem Innengewindeelement im kraftschlüssig gekoppelten Schaltzustand verdreht wird, muss sich das Verstellkraftübertragungselement an einem weiteren Bauteil, insbesondere an dem Hebelmechanismus zum Verstellen des Fahrzeugsitzteils abstützen.

Der nach dem Konzept der Erfindung aufgebaute Fahrzeugsitzverstellantrieb weist gemäß einer bevorzugten Ausführungsform mindestens zwei auf der Gewindespindel nebeneinander angeordnete Reiter auf, deren Verstellkraftübertragungselemente, vorzugsweise unabhängig voneinander, mit dem jeweils zugehörigen Innengewindeelement kraftschlüssig koppelbar und entkoppelbar sind, um mindestens zwei Fahrzeugsitzteile oder dem gesamten Fahrzeugsitz und mindestens ein Fahrzeugsitzteil unabhängig voneinander mit nur einem Fahrzeugsitzverstellantrieb verstellen zu können.

Es ist auch eine Ausführungsform denkbar, bei der für den bevorzugten Fall, dass mehrere Reiter vorgesehen sind, von denen zumindest einer mit einem Verstellkraft-übertragungselement ausgestattet ist, das mit einem zugehörigen Innengewindeelement kraftschlüssig koppelbar und von diesem entkoppelbar ist, einer der Reiter ohne Kupplungsmittel ausgebildet ist, so dass dieser mindestens eine Reiter immer, wenn die Gewindespindel verdreht wird entlang der Gewindespindel bewegt wird. Diese Ausführungsform ist dann von Vorteil, wenn unabhängig davon, welches Fahrzeugsitzteil mittels des Fahrzeugsitzverstellantriebes verstellt werden soll immer automatisch ein (weiteres) Fahrzeugsitzteil mit verstellt werden soll.

Ein nach dem Konzept der Erfindung ausgebildeter Fahrzeugsitzverstellantrieb ist gegenüber bekannten Lösungen von entscheidendem Vorteil, da es möglich ist, auf zumindest einen weiteren separaten Fahrzeugsitzverstellantrieb zu verzichten, wenn der nach dem Konzept der Erfindung ausgebildete Fahrzeugsitzverstellantrieb mit mindestens zwei Reitern ausgestattet ist, die mit unterschiedlichen Fahrzeugsitzteilen verstellend zusammenwirken. Hierdurch können Elektromotoren sowie Gewindespindeln mit zugehöriger Lagerung eingespart werden, wodurch zum einen kostengünstigere Lösungen angeboten werden können und zusätzlich das Gesamtgewicht eines mit einem nach dem Konzept der Erfindung ausgebildeten Fahrzeugsitzverstellantrieb ausgestatteten Fahrzeugsitzes reduziert wird.

Es liegt im Rahmen der Erfindung, die Gewindespindel drehbar am Fahrzeugsitz, insbesondere an einem Fahrzeugsitzgestell oder einer Fahrzeugsitzwanne zu lagern, wobei in diesem Fall zur Verstellung des gesamten Fahrzeugsitzes entlang der Fahrzeuglängsachse, insbesondere in Schienen, das Verstellkraftübertragungselement eines Reiters fest mit der Fahrzeugkarosserie, insbesondere dem Fahrzeugkarosserieboden verbunden ist. Alternativ ist es denkbar, die Gewindespindel an der Fahrzeugkarosserie, insbesondere dem Fahrzeugkarosserieboden drehbar zu befestigen, wobei in diesem Fall zur Verstellung des gesamten Fahrzeugsitzes entlang der Fahrzeuglängsachse das Verstellkraftelement eines Reiters fest (insbesondere über ein Hebelwerk) mit dem Fahrzeugsitz, vorzugsweise mit dem Fahrzeugsitzgestell, verbunden sein muss.

In Weiterbildung der Erfindung ist mit Vorteil vorgesehen, dass radial zwischen dem mit der Gewindespindel dauerhaft in Eingriff befindlichem Innengewindeelement und dem Verstellkraftübertragungselement ein Lager, insbesondere ein Kugellager vorgesehen ist, um zu gewährleisten dass das Innengewindeelement im entkoppelten Zustand reibungsarm relativ zu dem Verstellkraftübertragungselement zusammen mit der Gewindespindel verdrehbar ist. Gegebenenfalls kann dieses Lager auch als Gleitlager oder als Rollenkugellager ausgebildet sein.

Um zu verhindern, dass das mittels der Kupplungsmittel von dem Verstellkraftübertragungselement entkoppelte Innengewindeelement das Verstellkraftübertragungselement mitnimmt, d.h. entlang der Gewindespindel verstellt, ist in Ausgestaltung der Erfindung mit Vorteil vorgesehen, dass die Reibung, insbesondere die Haftreibung zwischen dem Innengewindeelement und der Gewindespindel größer ist als die Lagerreibung, insbesondere die Haftreibung des Lagers, beispielsweise eines Wälzlagers, zwischen dem Innengewindeelement und dem Verstellkraftübertragungselement.

Eine Möglichkeit zur Herstellung einer kraftschlüssigen Verbindung zwischen dem Innengewindeelement und dem Verstellkraftübertragungselement besteht darin, die Kupplungsmittel derart auszubilden, dass eine reibschlüssige Verbindung hergestellt wird. Eine reibschlüssige Verbindung kann beispielsweise mittels eines sich bei Anliegen einer elektrischen Spannung ausdehnenden oder zusammenziehenden Bauelementes, beispielsweise eines Piezoaktors, realisiert werden.

Zusätzlich oder bevorzugt alternativ zu dem Vorsehen von eine reibschlüssige Verbindung herstellenden Kupplungsmitteln ist eine Ausführungsform von Vorteil, bei der die Kupplungsmittel derart ausgebildet sind, dass die kraftschlüssige Verbindung mittels eines Formschlusses herstellbar ist.

Von besonderem Vorteil ist eine Ausführungsform, bei der die formschlüssige Kopplung mittels eines Kupplungselementes, insbesondere eines Kupplungsstiftes herstellbar ist, das mit Hilfe eines elektromagnetischen Aktuators betätigbar ist. Dabei kann der elektromagnetische Aktuator mit dem Kupplungsstift entweder an dem Innengewindeelement oder bevorzugt an dem Verstellkraftübertragungselement angeordnet sein, wobei der elektromagnetische Aktuator zum, insbesondere linearen Verstellen des Kupplungsstiftes zwischen einer entkoppelten Position und einer formschlüssigen Kopplungsposition ausgebildet und angeordnet ist.

In Weiterbildung der Erfindung ist mit Vorteil vorgesehen, dass das Kupplungselement, insbesondere der Kupplungsstift mit einem Gegenelement, beispielsweise einer Aussparung
oder einem Vorsprung zusammenwirkt, wobei eine Ausführungsform bevorzugt ist, bei der dieses Gegenelement an dem Innengewindeelement, vorzugsweise an dessen Außenumfang vorgesehen ist.

Eine Möglichkeit zur Ausbildung des Gegenelementes besteht darin eine Außenverzahnung vorzusehen, also von radial nach außen ragenden Vorsprüngen am Innengewindeelement. Vorzugsweise sind diese Vorsprünge (Zähne) gleichmäßig in Umfangsrichtung beabstandet, um unabhängig von der Relativlage zwischen dem Innengewindeelement und dem Verstellkraftübertragungselement möglichst schnell eine formschlüssige Verbindung zwischen diesen Bauteilen herstellen zu können.

Fertigungstechnisch ist es von besonderem Vorteil, wenn das Innengewindeelement aus mehreren, vorzugsweise zwei, insbesondere identischen Formteilen ausgebildet ist. Vorzugsweise sind diese Formteile Metallgussteile, beispielsweise Aluminiumgussteile. Das Vorsehen von mindestens zwei Formteilen ermöglicht es, die Formteile in Richtung ihrer Axialerstreckung aus entsprechenden Formen entnehmen zu können, wodurch in axialer Richtung verlaufende Grate und damit eine aufwendige Nachbearbeitungen der Formteile entfallen können.

Wie zu Anfang erwähnt, ist eine Ausführungsform von Vorteil, bei der auf der Gewindespindel mehrere nebeneinander angeordnete Reiter mit jeweils einem Innengewindeelement und jeweils einem mit diesem mit Hilfe von Kupplungsmitteln koppelbaren Verstellkraftübertragungselement vorgesehen sind, um mit einem einzigen Fahrzeugsitzverstellantrieb mehrere, vorzugsweise sämtliche verstellbaren Fahrzeugsitzteile eines Fahrzeugsitzes verstellen zu können.

In Weiterbildung der Erfindung ist mit Vorteil vorgesehen, dass, mindestens einer von mindestens zwei Reitern dauerhaft mit der Gewindestange in Eingriff steht, was zum einen dadurch realisiert werden kann, dass das Innengewindeelement des Reiters gleichzeitig als Verstellkraftübertragungselement dient oder dass das Innengewindeelement und das Verstellkraftübertragungselement als separate Bauteile ausgebildet und dauerhaft fest miteinander verbunden sind.

Die Erfindung betrifft auch die Verwendung eines zuvor beschriebenen Verstellantriebes in einem Kraftfahrzeugsitz, insbesondere zum Verstellen des Kraftfahrzeugsitzes und/oder zum Verstellen von mindestens einem Kraftfahrzeugsitzteil.

Ferner führt die Erfindung auf einen Fahrzeugsitz mit einem zuvor beschriebenen Fahrzeugsitzverstellantrieb. Bevorzugt ist dabei eine Ausführungsform, bei der die Gewindespindel des Fahrzeugsitzverstellantriebes zumindest näherungsweise horizontal angeordnet ist.

In Weiterbildung der Erfindung ist mit Vorteil vorgesehen, dass das Verstellkraftübertragungselement zumindest eines Reiters verstellkraftübertragend mit mindestens einem zu verstellenden Fahrzeugsitzteil oder der Fahrzeugkarosserie gekoppelt ist. Hierzu bietet sich insbesondere ein Hebelwerk mit mindestens einem Hebel, vorzugsweise einem Kniehebel, an. Bevorzugt ist eine Ausführungsform, bei der der Fahrzeugsitzverstellantrieb mindestens zwei Reiter aufweist, deren Verstellkraftübertragungselemente mit jeweils einem Fahrzeugsitzteil zum Übertragen einer Verstellkraft gekoppelt sind, oder einer der Reiter mit einem Fahrzeugsitzteil und der andere Reiter mit der Fahrzeugkarosserie zum Übertragen einer Verstellkraft gekoppelt ist.

Darüber hinaus führt die Erfindung auf ein Fahrzeug mit einem Fahrzeugsitz, der einen nach dem Konzept der Erfindung ausgebildeten Fahrzeugsitzverstellantrieb aufweist.

Bevorzugt ist eine Ausführungsform des Fahrzeugs, bei der die Gewindespindel des Fahrzeugsitzverstellantriebs am Fahrzeugsitz drehbar festgelegt ist. Alternativ ist die Gewindespindel drehbar an der Fahrzeugkarosserie gelagert.

### Kurze Beschreibung der Zeichnungen

Weitere Vorteile, Merkmale und Einzelheiten der Erfindung ergeben sich aus der nachfolgenden Beschreibung eines bevorzugten Ausführungsbeispiels der Erfindung sowie anhand der Zeichnung; diese zeigt in der einzigen Figur in einer stark schematisierten Darstellung einen Fahrzeugsitz mit einem nach dem Konzept der Erfindung ausgebildeten Fahrzeugsitzverstellantrieb, der an einem Fahrzeugkarosserieboden festgelegt ist.

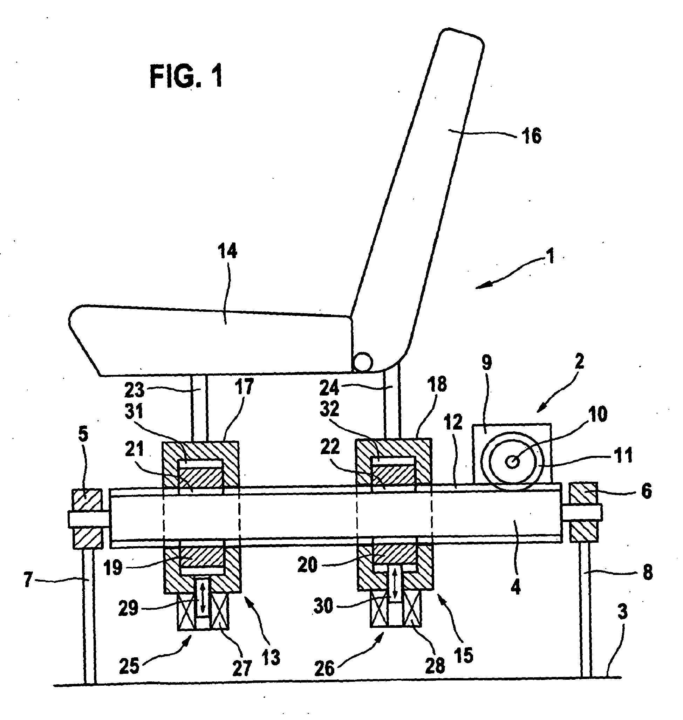

In Fig. 1 ist ein in einem Fahrzeug montierter Fahrzeugsitz 1 in einer stark schematisierten Darstellung gezeigt. Der Fahrzeugsitz 1 umfasst einen Fahrzeugsitzverstellantrieb 2, der an einem Fahrzeugkarosserieboden 3 festgelegt ist.

Der Fahrzeugsitzverstellantrieb 2 umfasst eine zum Fahrzeugkarosserieboden 3 parallel verlaufende Gewindespindel 4, die sich in Fahrzeuglängsrichtung erstreckt. Die Gewindespindel 4 ist mit Hilfe von schematisch angedeuteten, jeweils endseitig angeordneten Lagern 5, 6 drehbar gelagert, wobei die Lager 5, 6 über Verbindungselemente 7, 8 fest mit dem Fahrzeugkarosserieboden 3 verbunden sind.

Der Gewindespindel 4 ist ein als Elektromotor ausgebildeter Antriebsmotor 9 zugeordnet, der auf seiner Motorwelle 10 drehfest ein Schneckenrad 11 trägt, das drehmomentübertragend mit der Gewindespindel 4 bzw. mit einem Außengewinde 12 der Gewindespindel 4 in Eingriff ist.

Auf der Gewindespindel 4 sitzen ein erster Reiter 13 zum Verstellen eines als Fahrzeugsitzfläche ausgebildeten ersten Fahrzeugsitzteils 14 entlang einer Fahrzeuglängsachse und ein zweiter Reiter 15 zum Verstellen eines als Fahrzeugsitzlehne ausgebildeten zweiten Fahrzeugsitzteils 16. Beide Reiter 13, 14 weisen ein äußeres Verstellkraftübertragungselement 17, 18 auf, das jeweils von einem Gehäuse des ersten bzw. zweiten Reiters 13, 15 gebildet ist. Die Verstellkraftübertragungselemente 17, 18 stützen sich jeweils über zwei axial benachbarte, nicht gezeigte fakultative Lager, die radial zwischen dem entsprechenden Verstellkraftübertragungselement 17, 18 und einem zugehörigen Innengewindeelement 19, 20 (Muttern) angeordnet sind, radial innen an dem zugehörigen Innengewindeelement 19, 20 ab. Die Innengewindeelemente 19, 20 sind mittels ihres jeweiligen Innengewindes 21, 22 in dauerhaftem Eingriff mit der Gewindespindel 4.

Wie aus Fig. 1 zu erkennen ist, ist das Verstellkraftübertragungselement 17 des ersten Reiters 13 mit einem lediglich schematisch angedeuteten Hebelwerk 23 mit dem ersten Fahrzeugsitzteil 14 verbunden, und zwar derart, dass aus der Verstellung des ersten Reiters 13 entlang der Längserstreckung der Gewindespindel 4 eine Verstellbewegung des ersten Fahrzeugsitzteils 14 resultiert. In analoger Weise ist der zweite Reiter 15 bzw. das Verstellkraftübertragungselement 18 des zweiten Reiters 15 mittels eines wieder lediglich stark schematisiert wiedergegebenen Hebelwerkes 24 mit dem zweiten Fahrzeugsitzteil 16 verbunden, so dass eine Verstellbewegung des zweiten Reiters 15 in einer Verstellbewegung des zweiten Fahrzeugsitzteils 16 resultiert.

Wie sich weiterhin aus Fig. 1 ergibt, ist jeder Reiter 13, 15 mit Kupplungsmitteln 25, 26 ausgerüstet. Die Kupplungsmittel 25, 26 umfassen jeweils einen elektromagnetischen Aktuator 27, 28 (Spule), der bei entsprechender Bestromung ein zugehöriges Kupplungselement 29, 30, hier jeweils einen Kupplungsstift, in radialer Richtung in Bezug auf die Gewindespindel 4 verstellt. Hierdurch ist es möglich, je nach Vorwahl eines Benutzers, entweder nur das Verstellkraftübertragungselement 17 des ersten Reiters 13 mit dem Innengewindeelement 19 des ersten Reiters 13 oder lediglich das Verstellkraftübertragungselement 18 des zweiten Reiters 15 mit dem zugehörigen Innengewindeelement 22, oder die Verstellkraftübertragungselemente 17, 18 beider Reiter 13, 15 gleichzeitig mit den zugehörigen Innengewindeelementen 19, 20 zu koppeln. Im gekoppelten Zustand, d.h. bei radial nach innen verstellten Kupplungselementen 29, 30 greifen die Kupplungselemente 29, 30 formschlüssig in jeweils ein als Außenverzahnung ausgebildetes Gegenelement 31, 32 des zugehörigen Innengewindeelementes 21, 22 ein.

In dem gezeigten Ausführungsbeispiel ist das Verstellkraftübertragungselement 17 des ersten Reiters 13 nicht mit dem zugehörigen Innengewindeelement 21 gekoppelt, so dass bei sich drehender Gewindespindel 4 das zugehörige Innengewindeelement 21 an Ort und Stelle mit der Gewindespindel 4 mitgedreht wird, das zugehörige Verstellkraftübertragungselement 17 also mangels Kopplung nicht entlang der Gewindespindel 4 verstellt wird, wodurch das erste Fahrzeugsitzteil 14 seine Lage beibehält.

Anders verhält es sich mit dem zweiten Reiter 15 in der Konfiguration gemäß Fig. 1. Zu erkennen ist, dass das Kupplungselement 30 der Kupplungsmittel 26 des zweiten Reiters 15 radial nach innen verstellt ist und sich im formschlüssigen Eingriff mit dem als Außenverzahnung ausgebildeten Gegenelement 32 des Innengewindeelementes 22 des zweiten Reiters 15 befindet. Hierdurch dreht sich das Innengewindeelement 22 bei rotierender Gewindespindel 4 nicht mit dieser mit, sondern bewegt sich - aufgrund der Kopplung mit dem zugehörigen Verstellkraftübertragungselement 18 zusammen mit dem Verstellkraftübertragungselement 18 - je nach Drehrichtung der Gewindespindel in die eine oder andere Axialrichtung und verstellt dabei aufgrund der Kopplung mit dem zweiten Fahrzeugsitzteil 16 über das Hebelwerk 24 das zweite Fahrzeugsitzteil 16.

Es liegt im Rahmen der Erfindung weitere Reiter auf der Gewindespindel 4 vorzusehen, insbesondere auch mindestens einen Reiter ohne Kupplungsmittel.

## Patentansprüche

1. Fahrzeugsitzverstellantrieb, mit einer drehbar gelagerten Gewindespindel (4), mit einem elektrischen Antriebsmotor (9) zum Antreiben der Gewindespindel (4), und mit mindestens einem entlang der Gewindespindel (4) verstellbaren, ein mit der Gewindespindel (4) in Eingriff befindliches Innengewindeelement (19, 20) aufweisenden Reiter (13, 15), zum Verstellen eines Fahrzeugsitzes (1) und/oder eines Fahrzeugsitzteils (14, 16),
**dadurch gekennzeichnet,**
**dass** der Reiter (13, 15) ein Verstellkraftübertragungselement (17, 18) aufweist, das mit Hilfe von Kupplungsmitteln (25, 26) kraftschlüssig mit dem Innengewindeelement (19, 20) koppelbar und von diesem entkoppelbar ist.

2. Fahrzeugsitzverstellantrieb nach Anspruch 1,
**dadurch gekennzeichnet, dass** radial zwischen dem Verstellkraftübertragungs-element (17, 18) und dem Innengewindeelement (19, 20) ein Lager (5, 6), insbesondere ein Wälzlager vorgesehen ist.

3. Fahrzeugsitzverstellantrieb nach Anspruch 2,
**dadurch gekennzeichnet, dass** die Reibung zwischen dem Innengewindelelement (19, 20) und der Gewindespindel (4) größer ist als die Lagerreibung des Lagers (5, 6) zwischen dem Innengewindeelement (19, 20) und dem Verstellkraft-übertragungselement (17, 18).

4. Fahrzeugsitzverstellantrieb nach einem der vorhergehenden Ansprüche,
**dadurch gekennzeichnet, dass** die Kupplungsmittel (25, 26) eine reibschlüssige Kopplung herstellend ausgebildet sind.

5. Fahrzeugsitzverstellantrieb nach einem der vorhergehenden Ansprüche,
**dadurch gekennzeichnet, dass** die Kupplungsmittel (25, 26) eine formschlüssige Kopplung herstellend ausgebildet sind.

6. Fahrzeugsitzverstellantrieb nach Anspruch 5,
**dadurch gekennzeichnet, dass** die Kupplungsmittel (25, 26) ein mittels eines elektromagnetischen Aktuators (27, 28) betätigbares Kupplungselement (29, 30), insbesondere einen Kupplungsstift, aufweisen.

7. Fahrzeugsitzverstellantrieb nach Anspruch 6,
**dadurch gekennzeichnet, dass** der Aktuator an dem Verstellkraftübertragungselement (17, 18) festgelegt ist, und dass das Kupplungselement (29, 30) mit einem Gegenelement (31, 32) am Innengewindeelement (19, 20), insbesondere einer Aussparung oder einem Vorsprung, im gekoppelten Schaftzustand formschlüssig zusammenwirkt.

8. Fahrzeugsitzverstellantrieb nach Anspruch 7,
**dadurch gekennzeichnet, dass** das Gegenelement (31, 32) von einer Außenverzahnung am Innengewindeelement (19, 20) gebildet ist.

9. Fahrzeugsitzverstellantrieb nach einem der vorhergehenden Ansprüche,
**dadurch gekennzeichnet, dass** das Innengewindeelement (19, 20) aus mehreren, vorzugsweise zwei, insbesondere identischen, Formteilen ausgebildet ist.

10. Fahrzeugsitzverstellantrieb nach einem der vorhergehenden Ansprüche,
**dadurch gekennzeichnet, dass** mehrere auf der Gewindespindel (4) nebeneinander angeordnete Reiter (13, 15) mit jeweils einem Innengewindeelement (19, 20) und einem mit diesem mit Kupplungsmitteln (25, 26) koppelbaren Verstellkraftübertragungselement (17, 18) vorgesehen sind.

11. Fahrzeugsitzverstellantrieb nach einem der vorgesehenen Ansprüche,
**dadurch gekennzeichnet, dass** ein Reiter (13, 15) mit einem Innengewindeelement (19, 20) vorgesehen ist, das als Verstellkraftübertragungselement (17, 18) dient oder das dauerhaft fest mit einem Verstellkraftübertragungselement (17, 18) verbunden ist.

12. Verwendung eines Fahrzeugsitzverstellantriebs (2) nach einem der vorhergehenden Ansprüche zum Verstellen eines Fahrzeugsitzes (1) und/oder mindestens eines Fahrzeugsitzteils (14, 16).

13. Fahrzeugsitz mit einem Fahrzeugsitzverstellantrieb (2) nach einem der Ansprüche 1 bis 11.

14. Fahrzeugsitz nach Anspruch 13,
**dadurch gekennzeichnet, dass** die Gewindespindel (4) des Fahrzeugsitzverstellantriebes (2) zumindest näherungsweise horizontal angeordnet ist.

15. Fahrzeugsitz nach einem der Ansprüche 13 oder 14,
**dadurch gekennzeichnet, dass** mindestens ein Fahrzeugsitzteil (14, 16) des Fahrzeugsitzes (1) und/oder die Fahrzeugkarosserie, insbesondere mittels eines mindestens einen Hebel, insbesondere mindestens einen Kniehebel, aufweisenden Hebelwerks (23, 24), mit mindestens einem Verstellkraftübertragungselement (17, 18) gekoppelt ist.

16. Fahrzeug mit einem Fahrzeugsitz (1) nach einem der Ansprüche 13 bis 15.

17. Fahrzeug nach Anspruch 16,
**dadurch gekennzeichnet, dass** die Gewindespindel (4) des Fahrzeugsitz-verstellantriebs (2) am Fahrzeugsitz (1), insbesondere am Fahrzeugsitzgestell, oder an der Fahrzeugkarosserie, vorzugsweise am Fahrzeugkarosserieboden (3) drehbar festgelegt ist.

## Claims

1. Vehicle seat adjustment drive, with a rotatably mounted threaded spindle (4), with an electric driving motor (9) for driving the threaded spindle (4), and with at least one rider (13, 15), which is adjustable along the threaded spindle (4) and has an internal thread element (19, 20) in engagement with the threaded spindle (4), for adjusting a vehicle seat (1) and/or a vehicle seat part (14, 16), **characterized in that** the rider (13, 15) has an adjustment force transmission element (17, 18) which is couplable frictionally to the internal thread element (19, 20), and is decouplable therefrom, with the aid of coupling means (25, 26).

2. Vehicle seat adjustment drive according to Claim 1, **characterized in that** a bearing (5, 6), in particular a rolling contact bearing, is provided radially between the adjustment force transmission element (17, 18) and the internal thread element (19, 20).

3. Vehicle seat adjustment drive according to Claim 2, **characterized in that** the friction between the internal thread element (19, 20) and the threaded spindle (4) is greater than the bearing friction of the bearing (5, 6) between the internal thread element (19, 20) and the adjustment force transmission element (17, 18).

4. Vehicle seat adjustment drive according to one of the preceding claims, **characterized in that** the coupling means (25, 26) are designed such that they produce frictional coupling.

5. Vehicle seat adjustment drive according to one of the preceding claims, **characterized in that** the coupling means (25, 26) are designed such that they produce form-fitting coupling.

6. Vehicle seat adjustment drive according to Claim 5, **characterized in that** the coupling means (25, 26) have a coupling element (29, 30), in particular a coupling pin, which is actuable by means of an electromagnetic actuator (27, 28).

7. Vehicle seat adjustment drive according to Claim 6, **characterized in that** the actuator is fixed to the adjustment force transmission element (17, 18), and **in that** the coupling element (29, 30) interacts in a form-fitting manner in the coupled state of the shaft with a mating element (31, 32) on the internal thread element (19, 20), in particular with a cutout or a projection.

8. Vehicle seat adjustment drive according to Claim 7, **characterized in that** the mating element (31, 32) is formed by an external toothing on the internal thread element (19, 20).

9. Vehicle seat adjustment drive according to one of the preceding claims, **characterized in that** the internal thread element (19, 20) is formed from more than one, preferably two, in particular identical, shaped parts.

10. Vehicle seat adjustment drive according to one of the preceding claims, **characterized in that** a plurality of riders (13, 15) arranged next to one another on the threaded spindle (4) and in each case having an internal thread element (19, 20) and an adjustment force transmission element (17, 18) couplable to the latter by coupling means (25, 26) is provided.

11. Vehicle seat adjustment drive according to one of the preceding claims, **characterized in that** a rider (13, 15) is provided with an internal thread element (19, 20) which serves as an adjustment force transmission element (17, 18) or which is permanently connected securely to an adjustment force transmission element (17, 18).

12. Use of a vehicle seat adjustment drive (2) according to one of the preceding claims for adjusting a vehicle seat (1) and/or at least one vehicle seat part (14, 16).

13. Vehicle seat with a vehicle seat adjustment drive (2) according to one of Claims 1 to 11.

14. Vehicle seat according to Claim 13, **characterized in that** the threaded spindle (4) of the vehicle seat adjustment drive (2) is arranged at least approximately horizontally.

15. Vehicle seat according to either of Claims 13 or 14, **characterized in that** at least one vehicle seat part (14, 16) of the vehicle seat (1), and/or the vehicle body, is coupled to at least one adjustment force transmission element (17, 18) in particular by means of a lever mechanism (23, 24) having at least one lever, in particular at least one toggle lever.

16. Vehicle with a vehicle seat (1) according to one of Claims 13 to 15.

17. Vehicle according to Claim 16, **characterized in that** the threaded spindle (4) of the vehicle seat adjustment drive (2) is fixed rotatably to the vehicle seat (1), in particular to the vehicle seat frame, or to the vehicle body, preferably to the vehicle body floor (3).

## Revendications

1. Mécanisme de réglage d'un siège de véhicule, avec une broche filetée (4) montée à rotation, avec un moteur d'entraînement électrique (9) pour entraîner la broche filetée (4), et avec au moins un cavalier (13, 15) déplaçable le long de la broche filetée (4), présentant un élément à filetage interne (19, 20) se trouvant en prise avec la broche filetée (4), pour le réglage d'un siège de véhicule (1) et/ou d'une partie d'un siège de véhicule (14, 16),
**caractérisé en ce que**
le cavalier (13, 15) présente un élément de transfert de force de réglage (17, 18), qui peut être accouplé par engagement par force avec l'élément à filetage interne (19, 20) à l'aide des moyens d'accouplement (25, 26), et être désaccouplé de celui-ci.

2. Mécanisme de réglage d'un siège de véhicule selon la revendication 1, **caractérisé en ce que** l'on prévoit, radialement entre l'élément de transfert de force de réglage (17, 18) et l'élément à filetage interne (19, 20) un palier (5, 6), en particulier un palier à roulement.

3. Mécanisme de réglage d'un siège de véhicule selon la revendication 2, **caractérisé en ce que** le frottement entre l'élément à filetage interne (19, 20) et la broche filetée (4) est plus important que le frottement de palier du palier (5, 6) entre l'élément à filetage interne (19, 20) et l'élément de transfert de force de réglage (17, 18).

4. Mécanisme de réglage d'un siège de véhicule selon l'une quelconque des revendications précédentes,
**caractérisé en ce que** les moyens d'accouplement (25, 26) sont réalisés de manière à créer un accouplement par engagement par friction.

5. Mécanisme de réglage d'un siège de véhicule selon l'une quelconque des revendications précédentes,
**caractérisé en ce que** les moyens d'accouplement (25, 26) sont réalisés de manière à créer un accouplement par engagement par correspondance géométrique.

6. Mécanisme de réglage d'un siège de véhicule selon la revendication 5,
**caractérisé en ce que** les moyens d'accouplement (25, 26) présentent un élément d'accouplement (29, 30) pouvant être actionné au moyen d'un actionneur électromagnétique (27, 28), notamment une goupille d'accouplement.

7. Mécanisme de réglage d'un siège de véhicule selon la revendication 6,
**caractérisé en ce que** l'actionneur est fixé sur l'élément de transfert de force de réglage (17, 18), et **en ce que** l'élément d'accouplement (29, 30) coopère par engagement par correspondance géométrique avec un élément conjugué (31, 32) sur l'élément à filetage interne (19, 20), notamment un évidement ou une saillie, dans l'état accouplé de l'arbre.

8. Mécanisme de réglage d'un siège de véhicule selon la revendication 7,
**caractérisé en ce que** l'élément conjugué (31, 32) est formé par une denture extérieure sur l'élément à filetage interne (19, 20).

9. Mécanisme de réglage d'un siège de véhicule selon l'une quelconque des revendications précédentes,
**caractérisé en ce que** l'élément à filetage interne (19, 20) est réalisé à partir de plusieurs, de préférence deux, pièces moulées, notamment identiques.

10. Mécanisme de réglage d'un siège de véhicule selon l'une quelconque des revendications précédentes,
**caractérisé en ce que** plusieurs cavaliers (13, 15) disposés les uns à côté des autres sur la broche filetée (4) sont pourvus à chaque fois d'un élément à filetage interne (19, 20) et d'un élément de transfert de force de réglage (17, 18) pouvant être accouplé à celui-ci avec des moyens d'accouplement (25, 26).

11. Mécanisme de réglage d'un siège de véhicule selon l'une quelconque des revendications précédentes,
**caractérisé en ce qu'**un cavalier (13, 15) est pourvu d'un élément à filetage interne (19, 20), qui sert d'élément de transfert de force de réglage (17, 18) ou qui est connecté fixement de manière durable à un élément de transfert de force de réglage (17, 18).

12. Utilisation d'un mécanisme de réglage d'un siège de véhicule (2) selon l'une quelconque des revendications précédentes, pour le réglage d'un siège de véhicule (1) et/ou d'au moins une partie de siège de véhicule (14, 16).

13. Siège de véhicule comprenant un mécanisme de réglage de siège de véhicule (2) selon l'une quelconque des revendications 1 à 11.

14. Siège de véhicule selon la revendication 13,
**caractérisé en ce que** la broche filetée (4) du mécanisme de réglage de siège de véhicule (2) est disposée au moins approximativement horizontalement.

15. Siège de véhicule selon l'une quelconque des revendications 13 ou 14,
**caractérisé en ce qu'**au moins une partie de siège de véhicule (14, 16) du siège de véhicule (1) et/ou la carrosserie du véhicule, notamment au moyen d'un mécanisme à levier (23, 24) présentant au moins un levier, notamment au moins une genouillère, est accouplée à au moins un élément de transfert de force de réglage (17, 18).

16. Véhicule comprenant un siège de véhicule (1) selon l'une quelconque des revendications 13 à 15.

17. Véhicule selon la revendication 16,
**caractérisé en ce que** la broche filetée (4) du mécanisme de réglage de siège de véhicule (2) est fixée de manière rotative sur le siège de véhicule (1), notamment sur le bâti du siège de véhicule, ou sur la carrosserie du véhicule, de préférence sur le sol de la carrosserie du véhicule (3).
